# EUROPÄISCHE PATENTSCHRIFT

(11) **EP 0 787 629 B1**
(45) Veröffentlichungstag und Bekanntmachung des Hinweises auf die Patenterteilung: **09.05.2001**
(21) Anmeldenummer: 97100861.0
(22) Anmeldetag: 21.01.1997
(51) Int. Cl.: B60R 21/22

(54) **Fahrzeugsitz mit einem in der Rückenlehne angeordneten Gassack**
Vehicle seat with an air bag installed in the backrest
Siège de véhicule avec un sac gonflable installé dans le dossier

(30) Priorität: 02.02.1996 DE 29601798 U
(43) Veröffentlichungstag der Anmeldung: 06.08.1997
(73) Patentinhaber: TRW Occupant Restraint Systems GmbH & Co. KG, 73551 Alfdorf (DE)
(72) Erfinder: Föhl, Artur, 73614 Schorndorf (DE)
(74) Vertreter: Degwert, Hartmut, Dipl.-Phys.

(56) Entgegenhaltungen:
- EP-A- 0 593 845
- DE-A- 2 037 565
- DE-A- 2 046 265
- DE-U- 29 504 287
- FR-A- 2 116 092

## Beschreibung

Die Erfindung betrifft einen Fahrzeugsitz mit einem in der Rückenlehne gefaltet angeordneten, durch eine Gasquelle aufblasbaren Gassack.

Fahrzeugsitze sind gewöhnlich mit Kopfstützen versehen, deren Funktion darin besteht, bei einem Heckaufprall den Kopf des Insassen nach hinten abzustützen. Bei normaler Sitzposition verbleibt aber zwischen der Kopfstütze und dem Kopf des Insassen ein relativ großer Abstand, so daß bei einem Heckaufprall zunächst der Kopf des Insassen relativ zum Fahrzeugsitz nach hinten geschleudert wird, bis er auf der Kopfstütze auftrifft. Nach neueren Erkenntnissen gehen viele Verletzungen im Bereich der Halswirbel auf diese Kopfbewegung in der Anfangsphase des Aufprallgeschehens zurück.

Ein in der Rückenlehne eines Fahrzeugsitzes angeordneter Gassack ist an sich bereits aus der US-PS 3 655 217 bekannt; dieser Gassack dehnt sich jedoch bei Aktivierung nach oben zum Wagendach aus und kann keine größeren Kräfte quer zu seiner Ausdehnungsrichtung abstützen.

Der Erfindung liegt die Aufgabe zugrunde, einen Fahrzeugsitz zur Verfügung zu stellen, der mit einem Rückhaltesystem ausgestattet ist, welches Relativbewegungen zwischen dem Kopf des Insassen und seinem Oberkörper bei einem Heckaufprall weitgehend verhindert.

Dies wird bei einem Fahrzeugsitz der eingangs angegebenen Art erfindungsgemäß dadurch erreicht, daß der Gassack in einer Stützkassette, die in einen Schacht an der Oberseite der Rückenlehne eingesetzt ist, aufgenommen ist und bei Aktivierung der Gasquelle etwa in Höhe des Kopfes des Insassen sowie in dessen Richtung austritt, wobei die Stützkraft von der Stützkassette aufgebracht wird. Wesentliches Element des erfindungsgemäßen Fahrzeugsitzes ist die Stützkassette, die in der Lage ist, den Gassack auf seiner vom Kopf des Insassen abgewandten Seite abzustützen. Bei dem erfindungsgemäßen Fahrzeugsitz ist durch die Stützkassette eine sichere Rückhaltefunktion für den Kopf des Insassen gewährleistet, da der Gassack zwischen der Stützkassette und dem Kopf des Insassen nicht ausweichen kann.

Bei einer ersten Ausführungsform, die sich durch Einfachheit und geringen Aufwand auszeichnet, ist die Stützkassette fest in dem Schacht der Rückenlehne angebracht und überragt deren oberen Rand. Der Gassack ist so dimensioniert, daß er im aufgeblasenen Zustand eine Abstützfläche für den Kopf des Insassen bildet, die sich über eine ausreichende Höhe erstreckt, um auch bei sehr unterschiedlichen Körpergrößen eine gute Wirksamkeit zu gewährleisten. Bei dieser Ausführungsform erübrigt sich eine Höhenverstellung der Stützkassette.

Alternativ ist die Stützkassette höhenverschiebbar in der Rückenlehne angeordnet, wobei die Verschiebung vorzugsweise in Abhängigkeit von der Körpergröße des Insassen erfolgt. Bei dieser Ausführungsform kann das Volumen des Gassacks kleiner gehalten werden. Ein weiterer Vorteil besteht darin, daß die Stützkassette im normalen Ruhezustand vollständig innerhalb der Rückenlehne verborgen sein kann und über deren oberen Rand nicht hinaussteht, so daß sich keinerlei Beeinträchtigung der Sichtverhältnisse nach hinten ergibt.

Die Ausdehnung des Gassacks wird vorzugsweise durch innenseitig angeordnete Fangbänder begrenzt, um die bei Berührung des Gassacks mit dem Kopf des Insassen auftretenden Kräfte möglichst gering zu halten.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
Fig. 1 eine teilweise geschnittene, schematische Seitenansicht des erfindungsgemäßen Fahrzeugsitzes im normalen Ruhezustand;
Fig. 2 den Fahrzeugsitz bei aktiviertem Gassack;
Fig. 3 und 4 entsprechende Ansichten einer zweiten Ausführungsform; Fig. 5 in einer vereinfachten Querschnittsansicht die Rückenlehne eines Fahrzeugsitzes gemäß der zweiten Ausführungsform.

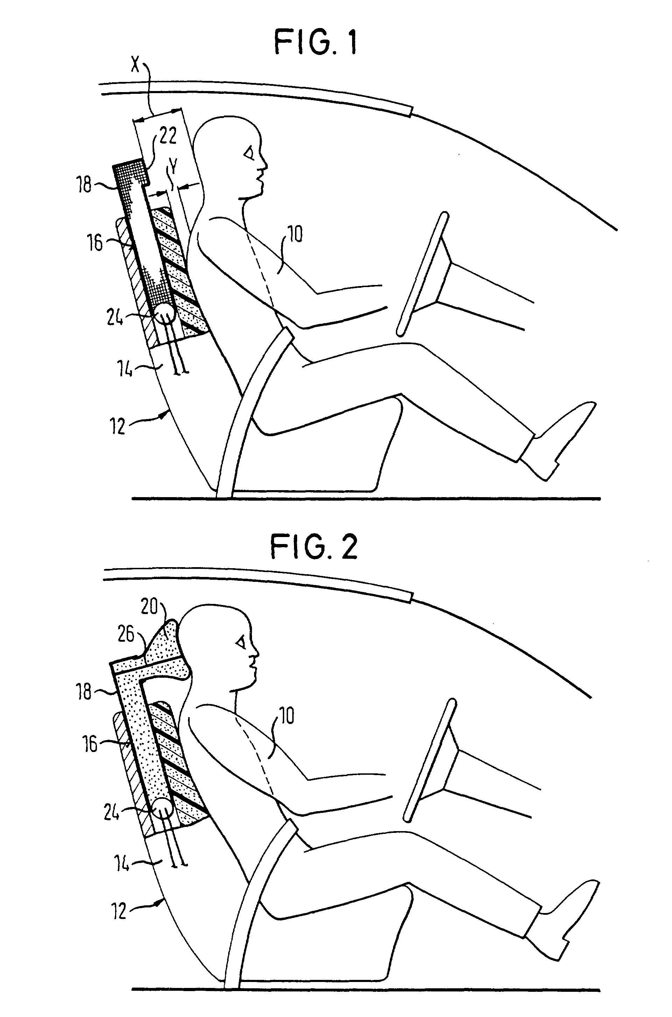

Fig. 1 zeigt einen Insassen 10 auf einem Fahrzeugsitz 12 in üblicher Sitzposition. Die Rückenlehne 14 des Fahrzeugsitzes 12 ist mit einem nach oben offenen Schacht 16 versehen, in den eine Stützkassette 18 eingesetzt ist. Diese Stützkassette 18 ragt über den oberen Rand der Rückenlehne 14 hinaus und erstreckt sich bis etwa in Höhe des Kopfes eines Insassen mittlerer Größe. Im Inneren der Stützkassette 18 ist ein Gassack gefaltet untergebracht, der in Fig. 2 im aufgeblasenen Zustand dargestellt und dort mit der Bezugszahl 20 bezeichnet ist. Die Stützkassette 18 weist auf ihrer dem Kopf des Insassen zugewandten Seite ein Fenster für den Durchtritt des Gassacks auf, welches durch eine aufreißbare Abdeckung 22 verborgen ist. Unterhalb der Stützkassette 18 ist in der Rückenlehne 14 ein Gasgenerator 24 angeordnet, beispielsweise ein pyrotechnischer Gasgenerator, der elektrisch gezündet wird. Durch die von dem Gasgenerator 24 erzeugten Druckgase wird der Gassack 20 aufgeblasen, so daß er sich in Richtung des Kopfes des Insassen 10 ausdehnt, wie in Fig. 2 gezeigt.

Es wird nun die mit dieser Ausbildung des Fahrzeugsitzes erreichte Schutzwirkung näher erläutert. Wie aus Fig. 1 ersichtlich ist, verbleibt zwischen dem Kopf des Insassen und der ihm zugewandten Fläche der Stützkassetten 18 bei normaler Sitzposition ein Abstand X, der eine erhebliche Größe aufweist. Ferner verbleibt zwischen der Schulterpartie des Insassen und der Rückenlehne ein Abstand, der in Fig. 1 mit Y bezeichnet ist. Bei einem Heckaufprall wird der Gasgenerator 24 durch ein Steuergerät nach vorherbestimmten Auslösekriterien aktiviert. Der Gassack 20 wird aufgeblasen und tritt durch das Fenster der Stützkassette 18 aus, wobei die Abdeckung 22 aufgerissen wird. Durch seine Massenträgheit wird der Fahrzeuginsasse 10 gegen die Rückenlehne 14 gedrückt, wobei der Abstand Y überwunden und auch das Maß X kleiner wird. Bevor eine Verschwenkung des Kopfes des Insassen relativ zum Oberkörper nach hinten erfolgen kann, ist der Gassack 20 vollständig aufgeblasen und bildet eine Abstützfläche, die sich an der Rückseite des Kopfes anlegt und diesen abstützt. Auf der gegenüberliegenden Seite werden die Stützkräfte durch die Stützkassette 18 aufgenommen.

Wie aus Fig. 2 ersichtlich ist, befinden sich im Inneren des Gassacks 20 Fangbänder 26, welche seine Ausdehnung in Richtung des Kopfes des Insassen begrenzen. Diese Fangbänder 26 greifen vorzugsweise etwa in der Mitte der Abstützfläche des Gassacks an, so daß sich beiderseits der Fangbänder ein Stützkissen für den Kopf ausbildet, welches an dessen Form angepaßt ist. Durch diese Formanpassung wird der Kopf des Insassen während des Aufprallgeschehens in einer stabilen Lage gehalten.

Die Härte des Gassacks 20 ist auf die der Polsterung der Rückenlehne 14 abgestimmt, so daß sich der Oberkörper des Fahrzeuginsassen in gleichem Maße in die Rückenlehne 14 wie der Kopf in den Gassack 20 eindrückt. Durch diese Abstimmung wird eine Relativbewegung zwischen dem Kopf und dem Oberkörper des Fahrzeuginsassen im Verlaufe des Unfallgeschehens vermieden. Um die angestrebte, relativ große Härte des Gassacks 20 zu erreichen, wird dieser vorzugsweise aus einem innenseitig beschichteten Textilmaterial gefertigt.

Bei der in Fig. 1 und 2 gezeigten Ausführungsform ist die Stützkassette 18 fest in der Rückenlehne 14 des Fahrzeugsitzes angebracht. Der Gassack 20 ist so dimensioniert, daß seine Abstützfläche sich über einen ausreichend großen Höhenbereich erstreckt, um bei allen vorkommenden Größen eines Fahrzeuginsassen eine gute Wirksamkeit der Abstützung zu gewährleisten.

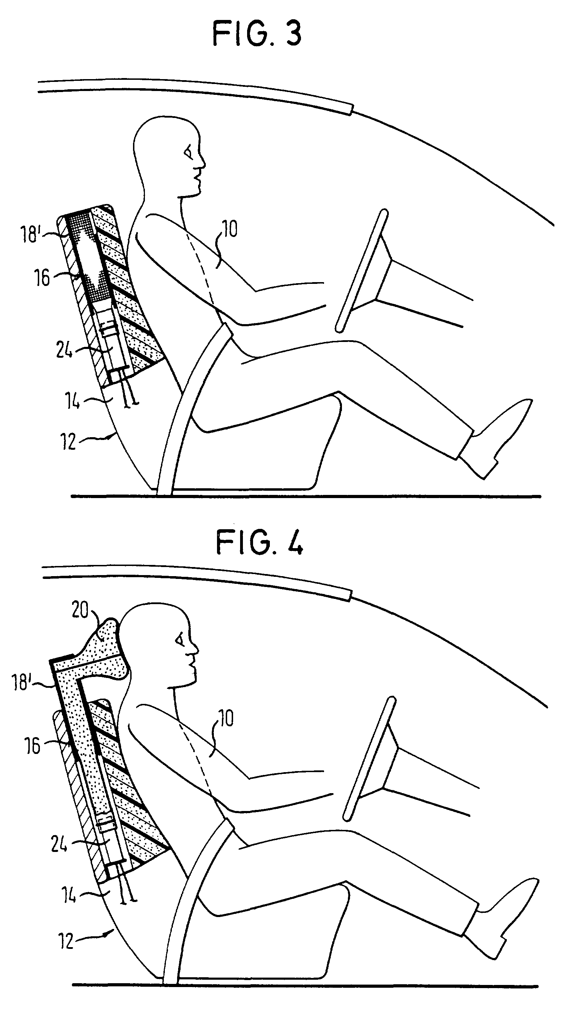

Bei der in Fig. 3, 4 und 5 gezeigten Ausführungsform ist hingegen die Stützkassette 18' höhenverschiebbar in der Rückenlehne 14 des Fahrzeugsitzes angeordnet. Bei der in Fig. 3 gezeigten, normalen Ruhestellung befindet sich die Stützkassette 18' vollständig innerhalb der Rückenlehne und ragt über deren oberen Rand nicht hinaus. Sie kann durch den Bezug der Rückenlehne vollständig verborgen sein. Bei Aktivierung des Gasgenerators 24 wird die Stützkassette 18' zunächst durch den Druck der erzeugten Gase nach oben gedrückt, wobei der Sitzbezug an einer dort vorgesehenen Reißlinie aufreißt. Die Stützkassette 18' tritt nun aus der Rückenlehne 14 aus, bis ihre Aufwärtsbewegung durch einen Anschlag begrenzt wird. Der Gassack 20 kann nun wie bei der zuvor beschriebenen Ausführungsform aus der Schutzkassette 18' austreten. Die Wirkungsweise ist bei dieser Ausführungsform prinzipiell die gleiche wie zuvor beschrieben, jedoch kann der Gassack ein geringeres Volumen aufweisen, wenn die Höhenverschiebung gemäß der bevorzugten Ausführungsform an die Größe des Fahrzeuginsassen angepaßt wird. Die Abstützfläche des Gassacks kann sich dann über eine geringere Höhe erstrecken.

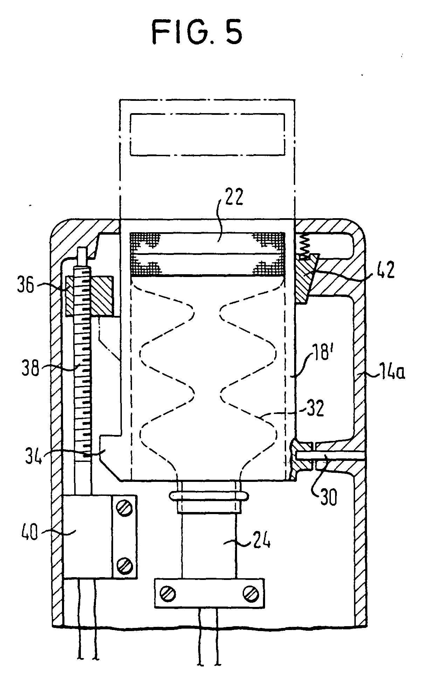

Fig. 5 zeigt Einzelheiten der bisher nur schematisch erläuterten zweiten Ausführungsform. Mit durchgezogenen Linien ist die normale Ruhestellung der Stützkassette 18' eingezeichnet, und der ausgefahrene Zustand ist strichpunktiert dargestellt.

Im Inneren des Rahmens 14a der Rückenlehne ist ein nach oben offener Schacht ausgebildet, in den die Stützkassette 18' höhenverschiebbar eingesetzt ist. In der Ruhestellung ist die Stützkassette 18' mittels eines Scherstiftes 30 am Rahmen 14a der Rückenlehne arretiert. Der Gasgenerator 24 ist mittels einer flexiblen balgartigen Schlauchleitung 32 an den Aufnahmeraum für den gefalteten Gassack innerhalb der Stützkassette 18' angeschlossen. Auf der dem Scherstift 30 gegenüberliegenden Seite ist die Stützkassette 18' mit einem Anschlagnocken 34 versehen. Dieser Anschlagnocken 34 wirkt mit einem höhenverstellbaren Anschlag 36 zusammen. Die Höhenverstellung des Anschlags 36 erfolgt mittels einer Gewindespindel 38, die durch einen Stellmotor 40 angetrieben wird. Die Steuerung des Stellmotors 40 erfolgt durch eine Einrichtung, die in der Lage ist, die Körpergröße des Fahrzeuginsassen festzustellen und den Anschlag 36 entsprechend zu verstellen. Es ist aber auch eine vereinfachte Ausführung mit einer manuellen Steuerung möglich.

Schließlich ist die Stützkassette 18' mit einer Rücklaufsperre ausgestattet, die sie in ihrer ausgeschobenen Stellung arretiert. Diese Rücklaufsperre ist durch einen federbelasteten Bremskeil 42 gebildet, der zwischen einer Seitenfläche der Stützkassette 18' und einer gegenüberliegenden Rampenfläche am Rahmen 14a der Rückenlehne wirksam ist.

Bei Aktivierung des Gasgenerators 24 treten die von diesem erzeugten Druckgase in die flexible Verbindungsleitung 32 ein, die am Innenumfang der Stützkassette 18' abgestützt wird und so den Gasdruck gegen die obere Begrenzungswand der Stützkassette 18' wirken läßt, die dann durch die Druckbeaufschlagung aufwärts gedrückt wird. Die Stützkassette tritt nun aus der oberen Berandung der Rückenlehne aus, nachdem der Scherstift 30 überwunden ist. Die Aufwärtsbewegung der Stützkassette 18' wird durch den Anschlag 36 begrenzt, an dem der Anschlagnocken 34 anstößt. Eine Rückbewegung der Stützkassette 18' wird durch den Bremskeil 42 verhindert, der sich zwischen der Seitenfläche der Stützkassette und der gegenüberliegenden Rampenflächen am Rahmen 14a der Rückenlehne abstützt.

## Patentansprüche

1. Fahrzeugsitz mit einem in der Rückenlehne (14) gefaltet angeordneten, durch eine Gasquelle (24) aufblasbaren Gassack (20), dadurch gekennzeichnet, daß der Gassack (20) in einer Stützkassette (18, 18'), die in einen Schacht (16) an der Oberseite der Rückenlehne (14) eingesetzt ist, aufgenommen ist und bei Aktivierung der Gasquelle etwa in Höhe des Kopfes des Insassen sowie in dessen Richtung austritt, wobei die Stützkraft von der Stützkassette (18, 18') aufgebracht wird.

2. Fahrzeugsitz nach Anspruch 1, dadurch gekennzeichnet, daß die Stützkassette (18) fest in dem Schacht (16) der Rückenlehne (14) angebracht ist und deren oberen Rand überragt.

3. Fahrzeugsitz nach Anspruch 1, dadurch gekennzeichnet, daß die Stützkassette (18') höhenverschiebbar in der Rückenlehne (14) angeordnet ist.

4. Fahrzeugsitz nach Anspruch 3, dadurch gekennzeichnet, daß die Stützkassette (18') in Abhängigkeit von der Körpergröße des Insassen höhenverschiebbar ist.

5. Fahrzeugsitz nach Anspruch 3 oder 4, dadurch gekennzeichnet, daß die zur Höhenverschiebung der Stützkassette (18') verwendete Antriebsenergie von der Energie der Gasquelle (24) abgeleitet ist.

6. Fahrzeugsitz nach Anspruch 5, dadurch gekennzeichnet, daß die Höhenverschiebung der Stützkassette (18') durch einen verstellbaren Anschlag (36) begrenzt ist.

7. Fahrzeugsitz nach Anspruch 6, dadurch gekennzeichnet, daß der Anschlag (36) automatisch entsprechend der Körpergröße des Insassen verstellt wird.

8. Fahrzeugsitz nach Anspruch 7, dadurch gekennzeichnet, daß die Höhenverstellung des Anschlags (36) mittels einer drehbaren Gewindespindel (38) erfolgt.

9. Fahrzeugsitz nach einem der Ansprüche 3 bis 8, dadurch gekennzeichnet, daß die Stützkassette (18') in normaler Ruhestellung den oberen Rand der Rückenlehne (14) nicht oder nur unwesentlich überragt.

10. Fahrzeugsitz nach einem der Ansprüche 3 bis 9, dadurch gekennzeichnet, daß die Stützkassette (18') in normaler Ruhestellung durch lösbare Haltemittel (30) gehalten ist.

11. Fahrzeugsitz nach einem der Ansprüche 3 bis 10, dadurch gekennzeichnet, daß die Stützkassette (18') in ausgefahrener Stellung durch eine Rücklaufsperre (42) gesichert ist.

12. Fahrzeugsitz nach einem der vorstehenden Ansprüche, dadurch gekennzeichnet, daß die Gasquelle (24) unterhalb der Stützkassette (18, 18') in der Rückenlehne (14) angeordnet ist.

13. Fahrzeugsitz nach Anspruch 12 und einem der Ansprüche 3 bis 11, dadurch gekennzeichnet, daß die Stützkassette (18') mit der Gasquelle (24) durch ein flexibles Verbindungselement (32) verbunden ist.

14. Fahrzeugsitz nach einem der vorstehenden Ansprüche, dadurch gekennzeichnet, daß der Gassack (20) in aufgeblasenem Zustand eine Härte aufweist, die in solcher Weise auf die Härte der Rückenlehne (14) abgestimmt ist, daß Relativbewegungen zwischen Kopf und Oberkörper des Insassen minimiert sind.

15. Fahrzeugsitz nach Anspruch 14, dadurch gekennzeichnet, daß die Härte des Gassacks (20) durch Beschichtung seiner Innenseite erhöht ist.

16. Fahrzeugsitz nach einem der vorstehenden Ansprüche, dadurch gekennzeichnet, daß die Ausdehnung des Gassacks (20) durch Fangbänder (26) begrenzt ist.

## Claims

1. Vehicle seat with a folded gas bag (20), which is located in the back rest (14) and which can be inflated by means of a gas source (24), characterised in that the gas bag (20) is located in a supporting casing (18, 18'), which is inserted in an accommodation (16) in the upper side of the back rest (14), and in that the gas bag (20) emerges at about the height of the head of the vehicle occupant and also in the direction towards the head of the vehicle occupant when the gas source is activated, with the supporting force being provided by the supporting casing (18, 18').

2. Vehicle seat in accordance with claim 1, characterised in that the supporting casing (18) is firmly fixed in the accommodation (16) of the back rest (14) and projects over the upper edge of said back rest.

3. Vehicle seat in accordance with claim 1, characterised in that the supporting casing (18') is mounted in the back rest (14) for vertical sliding movement.

4. Vehicle seat in accordance with claim 3, characterised in that the vertical sliding movement of the supporting casing (18') is dependent on the height of the vehicle occupant.

5. Vehicle seat in accordance with claims 3 or 4, characterised in that the drive energy used for the vertical sliding movement of the supporting casing (18') is derived from the energy of the gas source (24).

6. Vehicle seat in accordance with claim 5, characterised in that the vertical sliding movement of the supporting casing (18') is limited by an adjustable limit stop (36).

7. Vehicle seat in accordance with claim 6, characterised in that the limit stop (36) is automatically adjusted in accordance with the height of the vehicle occupant.

8. Vehicle seat in accordance with claim 7, characterised in that the height of the limit stop (36) is adjusted by means of a rotatable threaded spindle (38).

9. Vehicle seat in accordance with any of claims 3 to 8, characterised in that the supporting casing (18') does not project over the upper edge of the back rest (14), or projects only slightly over the upper edge of the back rest (14), in a normal resting position.

10. Vehicle seat in accordance with any of claims 3 to 9, characterised in that the supporting casing (18') is held in the normal resting position by releasable holding means (30).

11. Vehicle seat in accordance with any of claims 3 to 10, characterised in that the supporting casing (18') is secured in an extended position by a return stop (42).

12. Vehicle seat in accordance with any one of the preceding claims, characterised in that the gas source (24) is located below the supporting casing (18, 18') in the back rest (14).

13. Vehicle seat in accordance with claim 12 and any one of claims 3 to 11, characterised in that the supporting casing (18') is connected to the gas source (24) by means of a flexible connecting element (32).

14. Vehicle seat in accordance with any one of the preceding claims, characterised in that the gas bag (20) in its inflated condition has a degree of hardness which matches the hardness of the back rest (14) in such a way that relative movements between the head and the upper body of the vehicle occupant are reduced to a minimum.

15. Vehicle seat in accordance with claim 14, characterised in that the hardness of the gas bag (20) is increased by an internal coating.

16. Vehicle seat in accordance with any one of the preceding claims, characterised in that the expansion of the gas bag (20) is restricted by tether straps (26).

## Revendications

1. Siège de véhicule avec un coussin à gaz (20) disposé de façon repliée dans le dossier (14) et qui peut être gonflé par une source de gaz (24), caractérisé en ce que le coussin à gaz (20) est logé dans une cassette d'appui (18, 18'), qui est insérée dans un puits (16) sur la face supérieure du dossier (14), et sort, lors de l'activation de la source de gaz, à peu près à la hauteur de la tête du passager et dans sa direction, la force d'appui étant fournie par la cassette d'appui (18, 18').

2. Siège de véhicule selon la revendication 1, caractérisé en ce que la cassette d'appui (18) est placée de façon fixe dans le puits (16) du dossier (14) et dépasse le bord supérieur dudit dossier.

3. Siège de véhicule selon la revendication 1, caractérisé en ce que la cassette d'appui (18') est disposée de façon à pouvoir coulisser en hauteur dans le dossier (14).

4. Siège de véhicule selon la revendication 3, caractérisé en ce que la cassette d'appui (18') peut coulisser en hauteur en fonction de la taille du passager.

5. Siège de véhicule selon la revendication 3 ou 4, caractérisé en ce que l'énergie nécessaire à l'entraînement de la cassette d'appui (18'), pour la faire coulisser en hauteur, est prélevée sur l'énergie de la source de gaz (24).

6. Siège de véhicule selon la revendication 5, caractérisé en ce que le coulissement en hauteur de la cassette d'appui (18') est limitée par une butée (36) réglable.

7. Siège de véhicule selon la revendication 6, caractérisé en ce que la butée (36) est automatiquement réglée en fonction de la taille du passager.

8. Siège de véhicule selon la revendication 7, caractérisé en ce que le réglage en hauteur de la butée (36) a lieu au moyen d'une broche filetée (38) susceptible de tourner.

9. Siège de véhicule selon l'une quelconque des revendications 3 à 8, caractérisé en ce que la cassette d'appui (18'), quand elle est en position normale de repos, ne dépasse pas ou ne dépasse que de façon insignifiante le bord supérieur du dossier 14.

10. Siège de véhicule selon l'une quelconque des revendications 3 à 9, caractérisé en ce que la cassette d'appui (18'), quand elle est en position normale de repos, est maintenue par des moyens de fixation amovibles (30).

11. Siège de véhicule selon l'une quelconque des revendications 3 à 10, caractérisé en ce que la cassette d'appui (18'), quand elle est en position déployée, est bloquée par un cliquet antiretour (42).

12. Siège de véhicule selon l'une quelconque des revendications précédentes, caractérisé en ce que la source de gaz (24) est disposée en dessous de la cassette d'appui (18, 18') dans le dossier (14).

13. Siège de véhicule selon la revendication 12 et l'une quelconque des revendications 3 à 11, caractérisé en ce que la cassette d'appui (18') est reliée à la source de gaz (24) par un élément de liaison flexible (32).

14. Siège de véhicule selon l'une quelconque des revendications précédentes, caractérisé en ce que le coussin à gaz (20), quand il est gonflé, présente une dureté qui est ajustée à la dureté du dossier (14) de manière à minimiser les mouvements relatifs entre la tête et le torse du passager.

15. Siège de véhicule selon la revendication 14, caractérisé en ce que la dureté du coussin à gaz (20) est accrue par un revêtement de sa face intérieure.

16. Siège de véhicule selon l'une quelconque des revendications précédentes, caractérisé en ce que l'expansion du coussin à gaz (20) est limitée par des bandes de garde (26).
